Europäisches Patentamt

European Patent Office

Office européen des brevets

(19)

(11) Publication number: **0 360 365**
**A2**

# EUROPEAN PATENT APPLICATION

(21) Application number: 89203021.4

(22) Date of filing: 18.02.87

(51) Int. Cl.⁵: **G11B 15/61**

(30) Priority: 28.03.86 NL 8600814

(43) Date of publication of application:
**28.03.90 Bulletin 90/13**

(60) Publication number of the earlier application in accordance with Art.76 EPC: **0 239 139**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Muller, Johannes Cornelius**
**Antonius**
**c/o INT. OCTROOIBUREAU B.V. Prof.**
**Holstlaan 6**
**NL-5656 AA Eindhoven(NL)**
Inventor: **Beijersbergen van Henegouwen,**
**Cornelis Martin**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Magnetic-tape apparatus.**

(57) A magnetic-tape apparatus comprises a scanning unit (1) which comprises at least one magnetic head (6) mounted on a rotatable head support (5). The scanning unit (1) further comprises a drum-shaped guide means comprising an upper drumpart and a lower drumpart (4, 3) which occupy a fixed position on the frame and between which the head support (5) is mounted for rotation, the circumferential surfaces of said drumparts forming a curved tapeguide surface (7) which is situated near the circular path (6a) of the magnetic head (6) and over which the magnetic tape (8) is guided. Near a first area (35) of the tape-guide surface (7) in which during operation the magnetic head (6) first contacts the magnetic tape (8) and near a second area (36) of the tape-guide surface (7) in which during operation the magnetic head (6) gets out of contact with the magnetic tape (8) the tape-guide surface (7) extends radially beyond the circular path (6a) described by the free end of the magnetic head (6).

FIG.2

FIG.3

## Magnetic-tape apparatus

The invention relates to a magnetic-tape apparatus comprising a scanning unit mounted on a frame, said scanning unit comprising at least one magnetic head mounted on a rotatable head support, which magnetic head has a free end which during rotation describes a circular path, a drum-shaped guide means comprising an upper drum part and a lower drum part which occupy a fixed position on the frame and between which the head support is mounted for rotation, the circumferential outer surfaces of said drum parts together forming a curved tape guide surface for guiding a magnetic tape, said tape guide surface having a circular cylindrical part, which is situated near the circular path of the magnetic head.

A magnetic-tape apparatus of the type defined in the opening paragraph is known from European Patent Application No. 0,197,602 A1. In such an apparatus the tape is guided along a helical path over the guide surface formed by the circumferential outer surfaces of stationary upper and lower drums, so that during operation tracks which are inclined relative to the longitudinal axis of the magnetic tape are written onto or read from said tape by the magnetic head.

At both sides of the scanning unit there are inclined tape guides which have to be positioned accurately to guide the tape correctly to and from the scanning unit.

It is an object of the invention to provide a magnetic-tape apparatus of the type defined in the opening paragraph in which the tape guides can be positioned freely and with the need of less accuracy.

To this end the invention is characterized in that near a first area of the tape guide surface in which during operation the magnetic head first contacts the magnetic tape and near a second area of the tape guide surface in which during operation the magnetic head gets out of contact with the magnetic tape the tape guide surface extends radially beyond the circular path described by the free end of the magnetic head.

When such a tape guide surface is used the tape can leave the scanning unit after the second area at the same level relative to the frame at which the tape enters the scanning unit at the location of the tape first area. In this way all the guide means which must be positioned accurately are concentrated in the scanning unit. All the other tape guides of the magnetic-tape apparatus can be arranged in such a way that their lower end surfaces are situated at the same level relative to the frame, which results in a simple mounting of these tape guides.

A further advantage of the magnetic-tape apparatus of the invention is that the magnetic tape first contacts the guide surface before the magnetic head contacts the magnetic tape and that the magnetic head gets out of contact with the tape before the tape leaves the guide surface. In this way the vibration of the tape caused by the impact of the magnetic head on the tape is substantially reduced.

A preferred embodiment of the invention is characterized in that near the said first and second areas of the tape guide surface, the tape guide surface extends beyond the said circular path in a direction tangent to the circular cylindrical part of the guide surface. In this way the magnetic tape can be guided very smoothly so that remaining vibrations of the magnetic tape are decreased further.

The invention will now be described in more detail, by way of example, with reference to the accompanying drawings, which show an embodiment of a magnetic-tape apparatus comprising a scanning unit in accordance with the invention. In the drawings:

Fig. 1 is a perspective view of a magnetic-tape apparatus in accordance with the invention;

Fig. 2 is a side view, drawn to a different scale, of the scanning unit of the magnetic-tape apparatus shown in Fig. 1, and

Fig. 3 is a plan view of the scanning unit looking in the direction of the arrow III in Fig. 2.

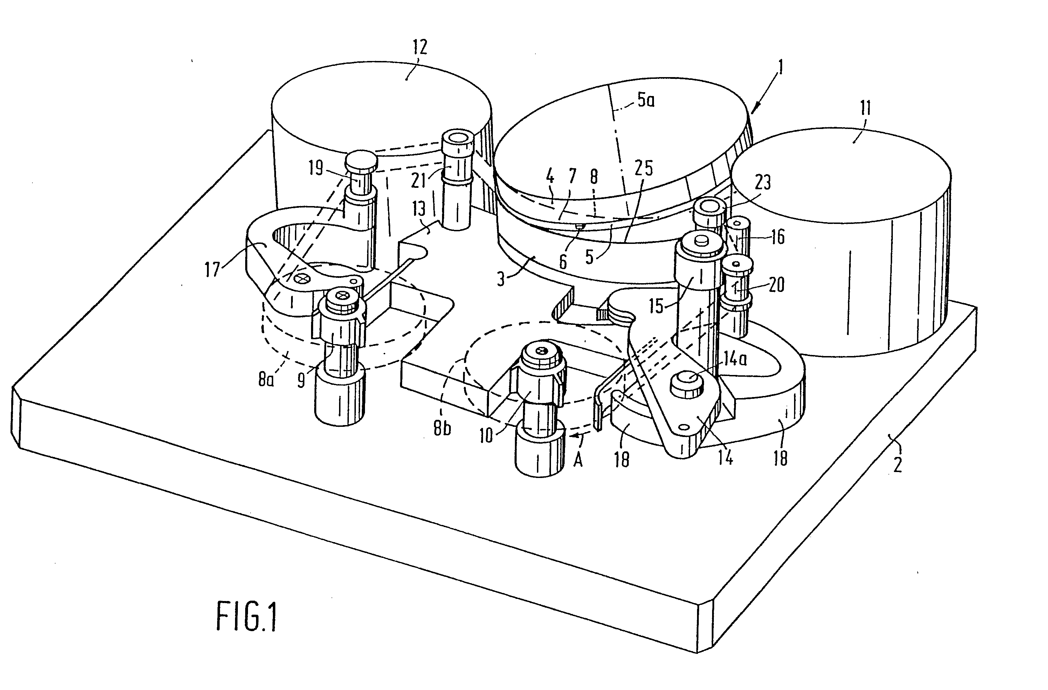

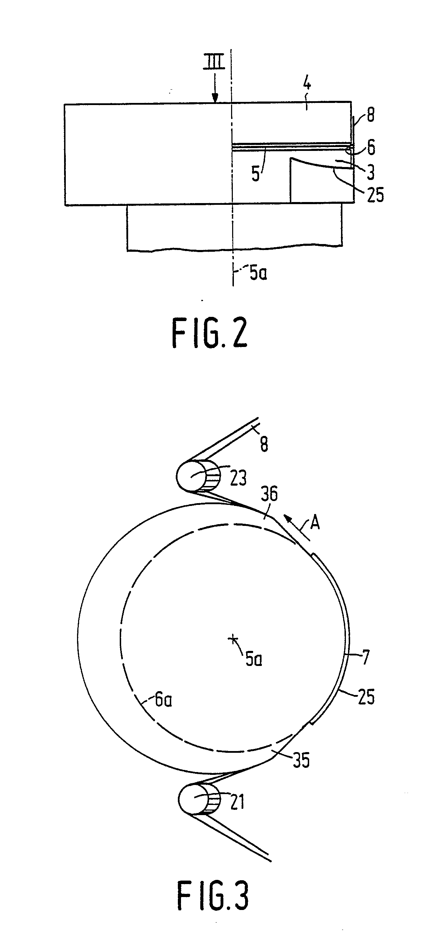

The magnetic-tape apparatus shown in Fig. 1 comprises a scanning unit 1 mounted on a frame 2 comprising a flat deck plate. The scanning unit 1 is shown to an enlarged scale in Fig. 2. The scanning unit comprises a drum-shaped guide means comprising two stationary drumparts 3 and 4. A head support 5 carrying a plurality of magnetic heads 6, for example four heads, is mounted for rotation between the lower drumpart and the upper drumpart. Together the lower drumpart and the upper drumpart form a curved tape-guide surface 7 having the shape of part of the surface of an imaginary circular cylinder whose axis coincides at least substantially with the axis of rotation 5a of the head support 5. During operation of the apparatus the surface 7 guides a magnetic tape 8 which, as is shown schematically in Fig. 1 is wound on tape reels 8a and 8b and which during normal operation is transported from the reel 8a to the reel 8b in the direction indicated by the arrow A. For this purpose the apparatus comprises winding spindles 9 and 10 which are driven, in a manner not shown, from the underside of the frame to provide the tape transport. Driving is effected by means of an electric motor 11 which, viewed in Fig. 1, is situated to the right of the scanning unit 1. The head support 5 is driven by means of an electric motor 12 which is situated to the left of the scanning unit. However, it is to be noted that alternatively, in a manner not shown, the drive of the head support 5 may be integrated in the scanning unit 1, in which case the drive is situated near the underside of the lower drumpart 3. On the upper side of the frame 2 a sliding plate 13 is arranged to be rectilinearly slidable in a direction perpendicular to a line interconnecting the axes of rotation of the winding spindles 9 and 10. Further, a pressure-roller lever 14 is arranged on the upper side of the frame 2 so as to be pivotable about a spindle 14a. The pressure-roller lever carries a pressure roller 15 which, in the operating position shown in Fig. 1, is positioned against the capstan 16 as a result of the pivotal movement of the pressure-roller lever 14. The capstan also is driven by the electric motor 11 in a manner not shown. In the operating position the capstan 16 in cooperation with the pressure roller 15 ensures that the magnetic tape 8 is moved over the tape-guide surface 7 with a constant velocity.

The sliding plate 13 controls two levers 17 and 18 which carry guide pins 19 and 20 respectively. The magnetic tape is guided round these pins from the reel 8a to the reel 8b. The sliding plate 13 further carries two tape guides 21 and 23.

In order to ensure a correct guidance of the tape in the direction of its width the lower drumpart 3 further comprises a guide face 25 in the form of a ledge on the circumferential outer surface of the drumpart 3. Thus, during its travel over the tapeguide surface 7 the tape performs an accurately predetermined movement so that during rotation the head 6 writes or reads tracks on the magnetic tape 8 which are inclined relative to the longitudinal axis of tapes. For a further description of the parts of the apparatus such as the sliding plate 13, and the movement of this plate to the various operating positions, reference is made to Applicants European Patent Application No. 0,197,602 A1.

As can be seen in Fig. 3 the tape guide surface 7 has a first area 35 in which during operation the magnetic head 6 first contacts the magnetic tape 8 and a second area 36 in which during operation the magnetic head 6 gets out of contact with the magnetic tape 8. Near these first and second areas 35, 36 the tape-guide surface 7 extends radially beyond a circular path 6a described by the free end of the magnetic head 6. The tape-guide surface 7 has a circular cylindrical part which is situated near the circular path 6a. Near said first and second areas 35, 36 the tape-guide surface 7 extends beyond the said circular path 6a in a direction tangent to the circular cylindrical part of the guide surface.

The first and second areas form tape guides 35 and 36. These tape guides 35 and 36 replace the inclined tape guides of the known apparatus. This construction enables said tape guides 35 and 36 to be formed simultaneously with the manufacture of the drum. When such tape guides are used the tape 8 can leave the scanning unit 1 after the guide 36 at the same level relative to the frame 2 at which the tape enters the scanning unit at the location of the tape guide 35.

By simultaneously forming the tape guides these tape guides 35, 36 need not be formed separately and are positioned accurately relative to the drum. Thus, all the guide means for the magnetic tape in the apparatus which should be positioned accurately are integrated in the scanning unit 1. If, relative to the tape-transport direction A over the tape-guide surface 7, further tape guides 21, 23 are arranged near both ends of the guide surface, the tape 8 can leave the scanning unit 1 at a level relative to a reference face, such as the upper side of the deck plate, which at least substantially corresponds to the level at which the tape enters the scanning unit. This is a significant advantage, because it enables the other tape guides 21, 23 of the magnetic-tape apparatus to be arranged with their portions which guide the lower tape edge situated at the same level relative to said reference face, so that these other tape guides 21, 23 can be mounted in a simple manner. Thus, in a situation in which the magnetic tape 8 is wound on reels 8a, 8b which are spaced equidistantly from said reference face, the transport of the tape out of the cassette accommodating the reels can be effected simply in the magnetic-tape apparatus in accordance with the invention.

Further, it is possible by optimising the shape of the guide surface 7 to arrange the magnetic heads 6 near that part of the guide surface where the tape 8 meets this surface, in such a way that the radial protrusion relative to the guide surface is slightly larger than at the location where the tape leaves the guide surface. At the location where the guide surface begins the thickness of the air film is generally larger than at the end of the guide surface.

The drum may be made of a metal, alternatively the drum can be manufactured advantageously from a plastic or the drum may be die-cast from aluminium.

## Claims

1. A magnetic-tape apparatus comprising a scanning unit (1) mounted on a frame, said scanning unit comprising
- at least one magnetic head (6) mounted on a rotatable head support (5), which magnetic head has a free end which during rotation describes a circular path (6a),
- a drum-shaped guide means comprising an upper drumpart (4) and a lower drumpart (3) which occupy a fixed position on the frame and between which the head support (5) is mounted for rotation, the circumferential outer surfaces of said drumparts together forming a curved tape guide surface (7) for guiding a magnetic tape (8), said tape guide surface having a circular cylindrical part, which is situated near the circular path (6a) of the magnetic head (6), characterized in that

near a first area (35) of the tape guide surface (7) in which during operation the magnetic head (6) first contacts the magnetic tape (8) and near a second area (36) of the tape guide surface (7) in which during operation the magnetic head (6) gets out of contact with the magnetic tape (8) the tape guide surface (7) extends radially beyond the circular path (6a) described by the free end of the magnetic head (6).

2. A magnetic-tape apparatus as claimed in claim 1, characterized in that near the said first and second areas (35, 36) of the tape guide surface (7), the tape guide surface (7) extends beyond the said circular path (6a) in a direction tangent to the circular cylindrical part of the guide surface (7).

FIG.1

FIG.2

FIG.3